# EUROPÄISCHE PATENTANMELDUNG

(11) **EP 1 388 689 A2**
(43) Veröffentlichungstag der Anmeldung: **11.02.2004**
(21) Anmeldenummer: 03017530.1
(22) Anmeldetag: 06.08.2003
(51) Int. Cl.: F16H 63/18

(54) **Verfahren und Vorrichtung zur Herstellung einer Schalttrommel**

(30) Priorität: 10.08.2002 DE 10236822
(71) Anmelder: Erdrich Beteiligungs GmbH, 77871 Renchen-Ulm (DE)
(72) Erfinder: Zeibig, Uwe, 77855 Achern-Oberachern (DE); Lorenz, Ulrich, 77855 Achern (DE); Fischer, Gebhard, 77876 Kappelrodeck-Waldulm (DE); Schutter, Stefan, 77855 Achern-Oberachern (DE)
(74) Vertreter: Maucher, Wolfgang, Dipl.-Ing.

(57) **Zusammenfassung**

Zur Herstellung einer Schalttrommel (1) mit einer an ihrem Umfang umlaufenden, mit seitlichen Flanken (3) etwa radial überstehenden, in ihrem Verlauf ihre Richtung ändernden Steuerkurve (2) wird ein Rohrstück oder ein tiefgezogener Rotationskörper (10) aus Metall in axialer Richtung gestaucht und entsprechend dem Verlauf der Steuerkurve (2) ausgebeult und der ausgebeulte Bereich (20) durch axial zueinander bewegte, die Nachbarbereiche der Ausbeulung (20) außenseitig umschließende Werkzeuge (5, 6) axial zusammengedrückt, deren Ränder jeweils den Verlauf der Flanken (3) der Steuerkurve (2) haben.

## Beschreibung

Die Erfindung betrifft ein Verfahren zur Herstellung einer Schalttrommel mit einer an ihrem Umfang umlaufenden, mit seitlichen Flanken etwa radial überstehenden, in ihrem Verlauf ihre Richtung ändernden Steuerkurve.

Derartige auf einem Trommelmantel umlaufende Steuerkurven sind in vielfältiger Form und für vielfältige Einsätze bekannt und dienen dazu, ein etwa gabel- oder nutförmiges Gegenstück bei einer Drehung der Trommel entsprechend dem Verlauf dieser Steuerkurve hin- und herzuverschieben oder umgekehrt bei feststehendem Gabelteil den Zylinder bei seiner Rotation in axialer Richtung zu bewegen.

Häufig werden derartige Trommeln mit Steuerkurve in Schaltgetrieben beispielsweise von Kraftfahrzeugen oder Motorrädern benötigt.
Die bisherigen derartigen Schalt- oder Steuertrommeln werden beispielsweise aus Vollmaterial spanabhebend oder durch Gießen gefertigt. Dies bedeutet jedoch in vielen Fällen ein unvertretbar hohes Gewicht. Darüber hinaus ist eine derartige Fertigung auch sehr teuer.

Aus DE 196 45 791 A1 ist eine spanlos hergestellte Schaltwalze, also eine Schalttrommel bekannt, welche aus Einzelteilen zusammengesetzt ist, die jeweils spanlos durch ein Umformverfahren hergestellt sind. Der eigentliche Walzenkörper ist dabei ein Rohrkörper, der durch Hochdruckumformen, das heißt durch ein hydraulisches Aufweiten, in die gewünschte Form gebracht wird, was als aufwendiges Herstellungsverfahren anzusehen ist, bei welchem eine entsprechende äußere Form benötigt wird.

Es besteht deshalb die Aufgabe, ein Verfahren und auch eine Vorrichtung zur Herstellung einer derartigen Schalt- oder Steuertrommel mit einer an der Außenseite verlaufenden, erhabenen Steuerkurve zu schaffen, die ein möglichst geringes Gewicht und dennoch eine hohe Stabilität hat.

Zur Lösung dieser Aufgabe ist das eingangs definierte Verfahren zur Herstellung der Schalttrommel dadurch gekennzeichnet, dass ein Rohrstück oder ein tiefgezogener Rotationskörper aus Metall in axialer Richtung gestaucht und entsprechend dem Verlauf der Steuerkurve ausgebeult wird und dass der ausgebeulte Bereich durch axial zueinander bewegte, die Nachbarbereiche der Ausbeulung außenseitig umschließende Werkzeuge axial zusammengedrückt wird, deren Ränder jeweils den Verlauf der Flanken der Steuerkurve haben. Der sich durch die Stauchung und Ausbeulung an der Außenseite der Schalttrommel bildende Wulst kann also um das Rohrstück oder den Hohlkörper in sich geschlossen umlaufen, aber auf diesem Weg, erforderlichenfalls auch mehrmals, die Richtung ändern und damit eine Steuerkurve bilden.

Durch diese Verformung ist die entstehende Schalttrommel einstückig und nahtlos, sodass bei geringem Gewicht, welches durch den verformten Rotationskörper vorgegeben ist, eine hohe Stabilität erreicht wird.

Eine besonders vorteilhafte Vorgehensweise bei dem erfindungsgemäßen Verfahren kann darin bestehen, dass ein erstes oder Oberwerkzeug das Rohrstück oder den Hohlzylinder an einer Stirnseite übergreift und an seinem Umfang bis zu dem auszubeulenden Bereich umschließt, dass ein zweites oder Unterwerkzeug die andere Stirnseite des Rohrstücks oder Hohlkörpers übergreift und den auf der anderen Seite der späteren Steuerkurve befindlichen Außenumfang und die Außenoberfläche des Rohrstücks oder Hohlkörpers umschließt und dass der auszubeulende und zur Steuerkurve zu formende Oberflächenbereich von beiden Werkzeugen freigelassen wird, dass dann das eine Werkzeug in Richtung zu dem anderen hin in axialer Richtung des Rohrstücks oder Hohlzylinders oder beide Werkzeuge in dieser Richtung aufeinander zu bewegt und das Rohrstück oder der Hohlzylinder gestaucht und zwischen den Werkzeugen ausgebeult wird und dass die Ausbeulung proportional zur Annäherung der Werkzeuge in radialer Richtung vergrößert und in axialer Richtung verkleinert wird. Damit lassen sich mit wenigen Arbeitsschritten und mit einfachen Mitteln viele verschiedenartige Steuerkurven einstückig an Rohrstücke oder Hohlzylinder anstauchen.

Um die Steuerkurve möglichst stabil zu gestalten, ist es zweckmäßig, wenn die angestauchte Ausbeulung derart zusammengedrückt wird, dass sich die Innenseiten der Flanken berühren. Dadurch ist eine nachträgliche Verformung der Steuerkurve in der praktischen Anwendung erschwert, weil die Steuerkurve praktisch die doppelte Wandstärke des Hohlzylinders aufweist. Außerdem ergibt sich eine Steuerkurve mit im wesentlichen parallelen Flanken und mit hoher Stabilität.

Diese erhöhte Festigkeit der Flanken der Steuerkurve lässt sich vorteilhaft mit einer vergrößerten radialen Ausdehnung der Steuerkurve kombinieren, wenn das Stauchen des Rohrstücks oder des Hohlzylinders in wenigstens zwei Schritten durchgeführt wird, wobei das Rohrstück oder der Hohlzylinder zunächst mit einem ersten Ober- und Unterwerkzeug solange axial verformt und gestaucht wird, bis sich die Ausbeulung bildet, und wenn es danach in ein zweites Ober- und Unterwerkzeug eingelegt und weiter axial verformt und gestaucht wird, insbesondere bis sich die Innenseiten der Flanken der Ausbeulung des Rohrstücks oder des Hohlzylinders berühren. Durch die schrittweise Ausbeulung des Materials kann das Material stärker bzw. in oder mit größerem Maß verformt werden.

Bei der Verformung des Werkstückes in einem oder wenigstens zwei Schritten ist es zweckmäßig, wenn das Rohrstück oder der Hohlzylinder bei der Verformung innenseitig durch ein Kern-Werkzeug abgestützt oder stabilisiert wird. Dadurch kann die Innenseite des Werkstücks verformungsfrei und glatt bleiben. Außerdem werden die auf das Werkstück wirkenden Kräfte besser in die zu verformenden Bereiche gelenkt.

Um die zu formende Steuerkurve möglichst maßgenau herstellen zu können, ist es vorteilhaft, wenn die Verformung der Steuerkurve mit Hilfe eines Seitenhalts radial begrenzt wird. Die Steuerkurve schlägt bei der Verformung an diesen Seitenhalt an und wird dadurch radial gestaucht. Dieses radial begrenzte Ausbeulen des Hohlzylinders lässt das Material nach dem Erreichen der Begrenzung bzw. des Seitenhalts bei der weiteren Verformung nun in die Flanken der Ausbeulung fließen und es kommt dadurch zu einer weiteren Verfestigung der Flanken. Außerdem kann der Durchmesser der Schalttrommel bei der Herstellung genauer festgelegt werden als ohne radiale Begrenzung der Ausbeulung. Je nach Form des Seitenhalts kann gleichzeitig die Umfangsfläche der Steuerkurve geformt werden. Beispielsweise kann sie zylindrisch ausgebildet sein.

Eine insbesondere zur Durchführung des vorstehend erläuterten Verfahrens und zur Lösung der Aufgabe geeignete Vorrichtung zur Herstellung einer Schalttrommel aus Metall aus einem Rohrstück oder einem tiefgezogenen Rotationskörper kann wenigstens zwei Werkzeuge mit zylindrischen Ausnehmungen zur Aufnahme des rohroder trommelförmigen Werkstücks aufweisen, die nach dem Einlegen des Werkstücks in axialer Richtung aufeinander zu bewegbar und zusammendrückbar sind und deren einander zugewandte Ränder von einer Durchmesserebene abweichend und parallel zueinander verlaufen und entsprechend einer radial zwischen ihnen auszubeulenden oder zu bildenden Steuerkurve gekrümmt sind.

Die Arretierung des Rohrstückes oder Hohlzylinders bei der Stauchung kann dadurch erreicht werden, dass die Werkzeuge jeweils an dem der Ausnehmung abgewandten Ende ihrer zylindrischen Hohlräume Widerlager für die Stirnseite des rohr- oder trommelförmigen Werkstücks haben, dessen Außendurchmesser dem Innendurchmesser der zylindrischen Hohlräume entspricht. Dadurch wird die auf das Werkstück wirkende Kraft axial und nur auf die Wandung ausgeübt, damit ausschließlich die Wandung des Werkstückes gestaucht wird.

Vorteilhaft für das Stauchen des zylindrischen Werkstücks ist es, wenn die einander zugewandten, entsprechend der anzuformenden Steuerkurve verlaufenden Ränder der Werkzeuge jeweils eine umlaufende Ausnehmung zur Aufnahme des anzuformenden radialen Wulstes beim Zusammendrücken der beiden Formen aufweisen oder freilassen. Dadurch wird ein Ausbeulen und Fließen des Werkstoffes in die gewünschte Form ermöglicht.

Das Fließen des Werkstoffes nach außen wird vorteilhaft unterstützt, wenn ein zylindrisches Kern-Werkzeug im Inneren des Rohrstücks oder des Hohlzylinders angeordnet ist, wobei der Außendurchmesser des Kern-Werkzeuges dem Innendurchmesser des Rohrstücks oder des Hohlzylinders entspricht. Dadurch kann die Innenseite des Werkstückes verformungsfrei bleiben und der Werkstoff ausschließlich nach außen verformt werden.

Das Fließen des Werkstoffes nach außen wird für eine gute Maßhaltigkeit der anzuformenden Steuerkurve zweckmäßig dadurch begrenzt, dass wenigstens eines der beiden Werkzeuge eine radiale Begrenzung oder einen Seitenhalt im axial freigelassenen Bereich des Rohrstücks oder des Hohlzylinders aufweist, indem der der Steuerkurve entsprechende Rand in einer von diesem Seitenhalt radial begrenzten Vertiefung angeordnet ist. Erreicht der Werkstoff den Seitenhalt, kann er bei weiterer Verformung vom Seitenhalt weg in die Flanken der Steuerkurve fließen. Die Flanken können dadurch auch an die obere und untere Begrenzung der Ausnehmung angelegt werden, was ebenfalls einer höheren Maßhaltigkeit entspricht.

Dabei kann es zweckmäßig sein, wenn die radiale Begrenzung oder der Seitenhalt der Steuerkurve an den Werkzeugen parallel zur Stauchungsrichtung des Rohrstücks oder des Hohlzylinders verläuft. Dadurch kann das Material des Hohlzylinders während der axialen Bewegung von Ober- und Unterwerkzeug besonders leicht in die vom Werkzeug vorgegebene Form einfließen.

Die mit dem erfindungsgemäßen Verfahren herstellbare Schalttrommel mit einer an ihrer zylindrischen Oberfläche verlaufenden, radial überstehenden Steuerkurve besteht aus einem Rohrstück oder einem tiefgezogenen Zylinder, an den die Steuerkurve durch axiales Stauchen einstückig angeformt ist. Dieser Aufbau der Schalttrommel bietet bei einem geringen Gewicht eine hohe Stabilität gegen die in Gebrauchsstellung wirkenden Kräfte und damit eine langzeitig genaue Führung der an der Steuerkurve angreifenden Bauteile.

Für eine hohe Stabilität der Schalttrommel ist es zweckmäßig, wenn sie an einer Stirnseite einen einstückig mit ihr verbundenen Boden hat. Außerdem kann dieser Boden vielfältige Befestigungsmöglichkeiten bei der praktischen Verwendung der Schalttrommel bieten.

In einer vorteilhaften Ausführung kann der an einem Ende angeordnete, einstückig mit der Trommel verbundene Boden zentral durchbrochen und dabei in einem mittleren Bereich in axialer Richtung tiefgezogen sein und dieser Durchbruch kann als Lagerstelle für eine durch die Schalttrommel verlaufende Welle, Achse oder Stange dienen. Damit kann die Schalttrommel eine rotierende Bewegung um die eigene Achse ausführen und die an der Steuerkurve anliegenden Gegenstücke führen.

Wird der metallische Hohlzylinder mit einem solche Werkzeugteile aufweisenden Werkzeug gestaucht, entsteht ein Wulst, der entsprechend den von einer Ebene abweichenden Rändern am Außenumfang verläuft und somit die gewünschte Steuerkurve ergibt, die dabei vorgegebene Richtungsänderungen und unterschiedliche Steigungen haben kann.

Vor allem bei Kombination einzelner oder mehrerer der vorbeschriebenen Maßnahmen und Merkmale ergibt sich eine einstückige und nahtlose Schalttrommel, die neben einem geringen Gewicht auch eine hohe Stabilität aufweisen kann. Mit dem erfindungsgemäßen Verfahren kann die Schalttrommel kostengünstig und in wenigen Arbeitsschritten hergestellt werden.

Nachstehend sind Ausführungsbeispiele der Erfindung anhand der Zeichnung näher beschrieben. Es zeigt in zum Teil schematisierter Darstellung:
- Fig. 1: eine perspektivische Darstellung einer Schalttrommel mit Boden,
- Fig. 2: eine perspektivische Darstellung einer Schalttrommel ohne Boden,
- Fig. 3: einen Längsschnitt eines Ausgangswerkstückes für die Herstellung der Schalttrommel vor der Stauchung,
- Fig. 4: einen Längsschnitt der Werkzeuge mit einem Werkstück nach erfolgter Stauchung,
- Fig. 5: eine der Fig. 4 entsprechenden Darstellung, wobei die Ausnehmung des Unterwerkzeuges einen Seitenhalt aufweist,
- Fig. 6: einen Längsschnitt der Werkzeuge mit einem Werkstück nach der ersten Stufe einer zweistufigen Stauchung,
- Fig. 7: einen Längsschnitt der Werkzeuge mit einem Werkstück nach der zweiten Stufe einer zweistufigen Stauchung sowie
- Fig. 8: einen Längsschnitt durch eine nach dem erfindungsgemäßen Verfahren hergestellte Schalttrommel.

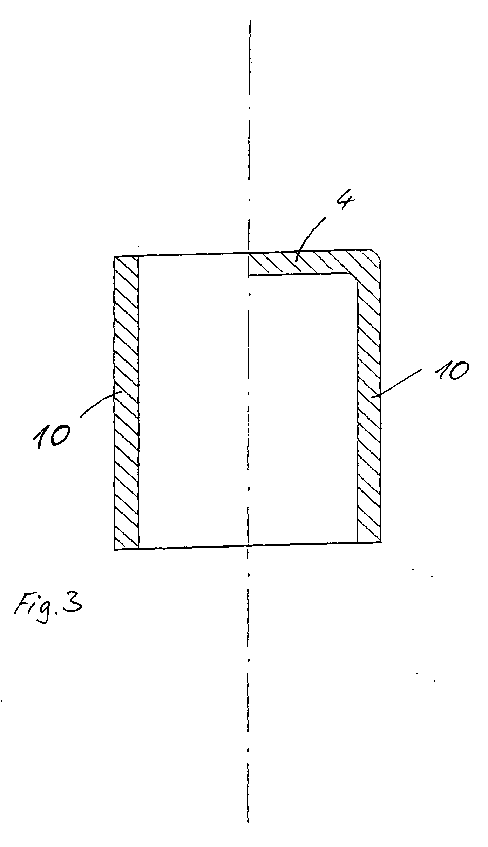

In den Fig. 3 bis 8 zeigt jeweils die linke Hälfte der Zeichnung ein Werkstück in Form eines Rohrstückes ohne Boden und in der rechten Hälfte der Zeichnung ist ein Werkstück in Form eines tiefgezogenen Hohlzylinders mit Boden dargestellt. In den folgenden Figuren erhalten in ihrer Funktion übereinstimmende Teile auch bei unterschiedlicher konstruktiver Gestaltung übereinstimmende Bezugszahlen.

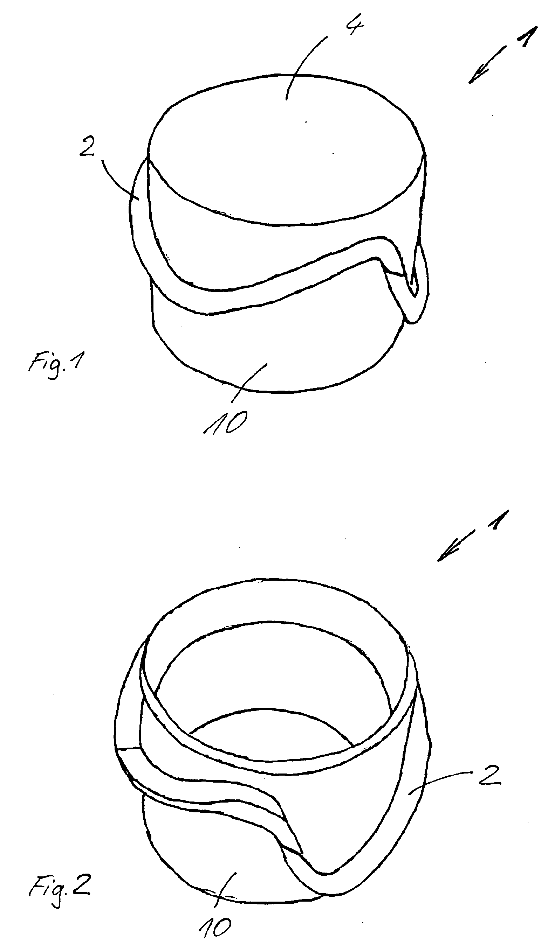

Fig. 1 zeigt eine Schalttrommel 1 mit einer an ihrer zylindrischen Oberfläche verlaufenden, radial überstehenden Steuerkurve 2, wobei die Steuerkurve 2 durch axiales Stauchen einstückig an einen tiefgezogenen Hohlzylinder 10 angeformt ist. Die Schalttrommel 1 weist an ihrer oberen Stirnseite einen Boden 4 auf, der einstückig mit der Schalttrommel 1 verbunden ist.

Fig. 2 zeigt eine Schalttrommel 1 ähnlich der Ausführung in Fig. 1. Die hier gezeigte Schalttrommel 1 besteht im Unterschied zu Fig. 1 aus einem Rohrstück 10 ohne Boden, an welches die Steuerkurve 2 durch axiales Stauchen einstückig angeformt ist.

Fig. 3 zeigt die beiden Ausführungsformen mit und ohne Boden im Querschnitt vor der Verformung.

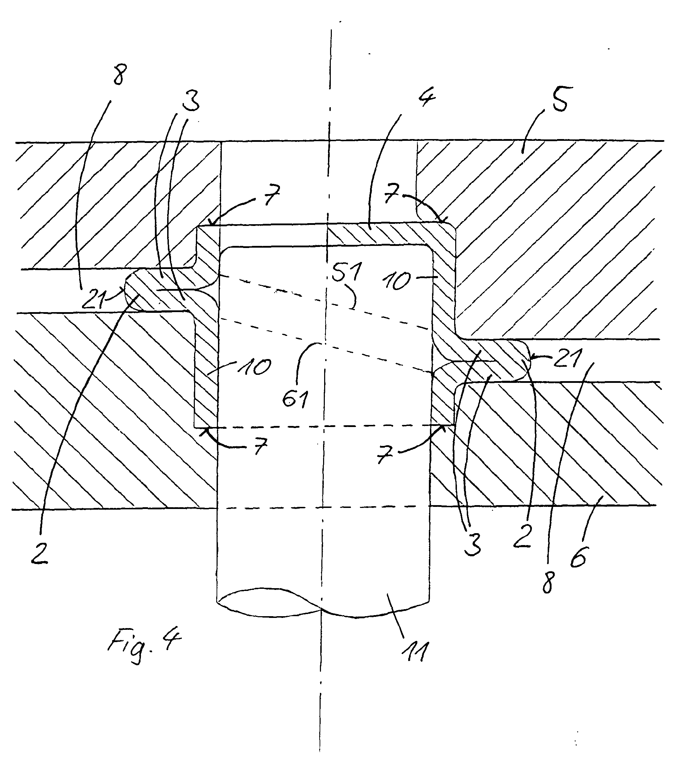

In Fig. 4 ist eine Vorrichtung zur Herstellung einer Schalttrommel 1 erkennbar, die zwei Werkzeuge 5 und 6 mit zylindrischen, umlaufenden Ausnehmungen 8 zur Aufnahme des rohr- oder trommelförmigen Werkstücks 10 aufweist, die nach dem Einlegen des Werkstücks 10 in axialer Richtung aufeinander zu bewegbar und zusammendrückbar sind und deren einander zugewandte Ränder 51 und 61 von einer Durchmesserebene abweichend und parallel zueinander verlaufen und entsprechend einer radial zwischen ihnen auszubeulenden oder zu bildenden Steuerkurve 2 gekrümmt sind. Zwischen Oberwerkzeug 5 und Unterwerkzeug 6 ist ein bereits gestauchtes Werkstück 10 dargestellt, dessen Steuerkurve 2 in der Ausnehmung 8 geformt wurde. Die Flanken 3 der Steuerkurve 2 liegen in diesem Falle mit ihren Innenseiten aneinander.
Zur Aufnahme des Werkstücks 10 weisen die Werkzeuge 5 und 6 jeweils an dem der Ausnehmung 8 abgewandten Ende ihrer zylindrischen Hohlräume Widerlager 7 für die Stirnseite des Werkstücks 10 auf, dessen Außendurchmesser dem Innendurchmesser der zylindrischen Hohlräume entspricht.

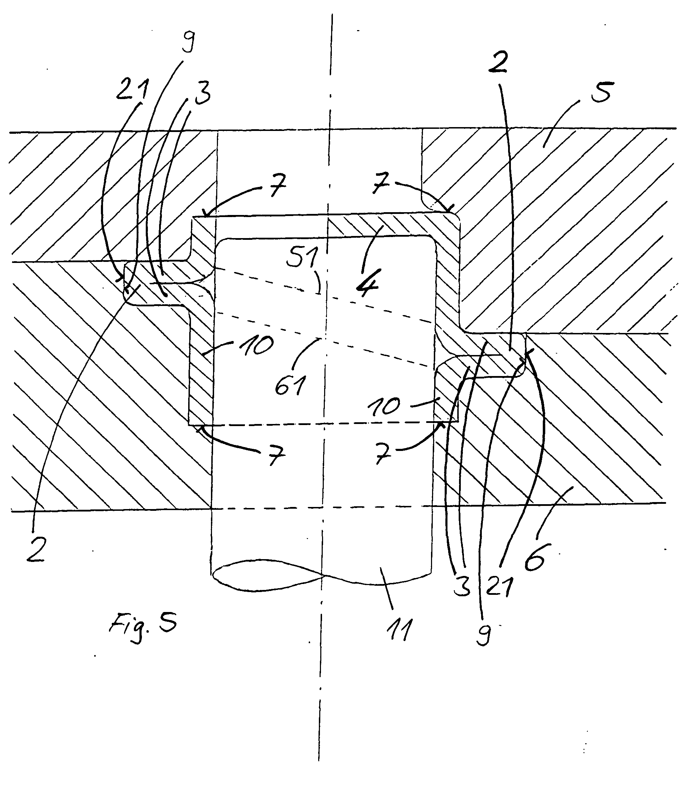

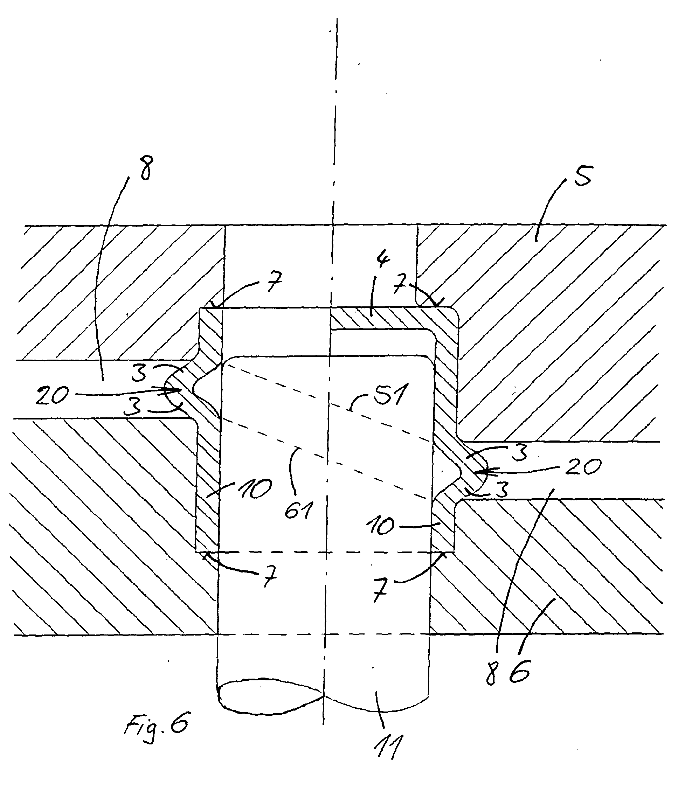

Fig. 4 zeigt ein auch in den Fig. 5 und 6 erkennbares Kern-Werkzeug 11, welches im Inneren des Werkstücks 10 angeordnet ist und dessen Außendurchmesser dem Innendurchmesser des Werkstücks 10 entspricht. Dadurch wird die Innenseite des Werkstücks 10 gegen ein innenseitiges Verformen stabilisiert.

Bei der Herstellung der Schalttrommel 1 wird also so verfahren, dass das Rohrstück oder der tiefgezogene Rotationskörper 10 aus Metall mit Hilfe der Werkzeuge 5 und 6 in axialer Richtung gestaucht und entsprechend dem Verlauf der Steuerkurve 2 ausgebeult wird. Dabei wird der zunächst nur schwach und dann durch die weitere Annäherung der Werkzeuge 5 und 6 mehr und mehr ausgebeulte Bereich 20 durch die axial zueinander bewegten Ränder 51 und 61 der auch die Ausbeulung 21 außenseitig umschließenden Werkzeuge 5 und 6 zusammengedrückt, wobei die Ränder 51 und 61 jeweils den Verlauf der entstehenden Flanken 3 der Steuerkurve 2 haben.

Fig. 5 zeigt entsprechend der Darstellung in Fig. 4 Ober- und Unterwerkzeug 5 und 6 sowie das durch die aufeinander zu bewegten Werkzeuge 5 und 6 gestauchte Werkstück 10 zwischen den Werkzeugen 5 und 6. In dieser Ausführungsform der Vorrichtung weist das Unterwerkzeug 6 eine radiale, parallel zur Stauchungsrichtung des Werkstückes 10 verlaufende Begrenzung oder einen Seitenhalt 9 in der Ausnehmung 8 auf, an den sich die äußere Mantelfläche 21 der die Steuerkurve 2 bildende Ausbeulung 20 in der letzten Phase der Ausformung der Steuerkurve 2 anlegt. Der Seitenhalt 9 ist die radiale Begrenzung einer Vertiefung, in welcher in diesem Fall der Rand 61 des Unterwerkzeuges 6 verläuft.

Da dieser Seitenhalt 9 eine zylindrische Innenkontur hat, entsteht dadurch auch eine Mantelfläche 21 mit achsparallelen Mantellinien, während bei einer Schalttrommel 1, die in einem Werkzeugsatz gemäß Fig. 4 hergestellt wurde, die Mantellinien dieser äußeren Mantelfläche 21 gekrümmt sind.

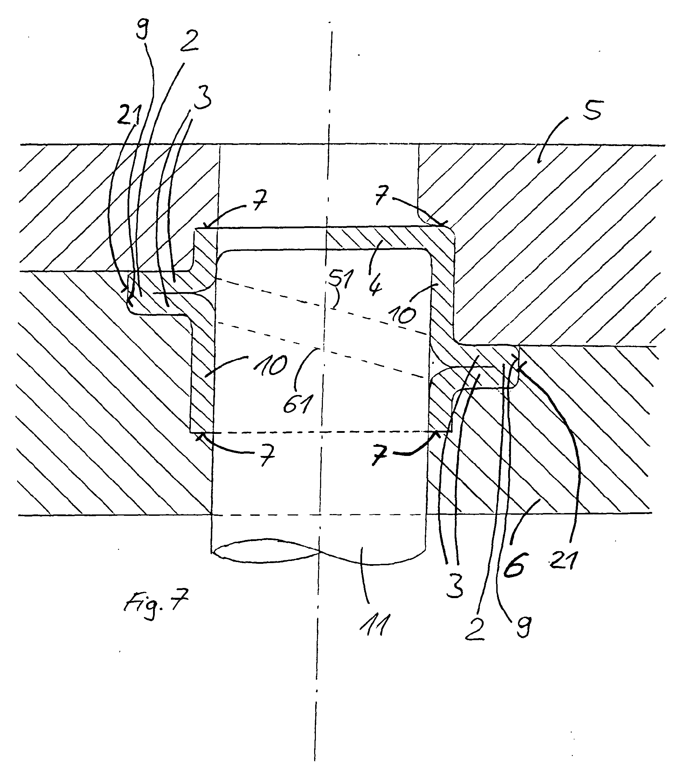

Fig. 6 und 7 zeigen einen zweistufigen Verlauf der Herstellung einer Schalttrommel 1 aus einem Rohrstück mit oder ohne Boden.

In Fig. 6 ist das Ende des ersten Schrittes des Verfahrens erkennbar, bei dem das zwischen Oberwerkzeug 5 und Unterwerkzeug 6 befindliche Werkstück 10 durch die sich aufeinander zu bewegenden Werkzeuge 5 und 6 solange axial verformt und gestaucht wird, bis sich die Ausbeulung 20 in der Ausnehmung 8 bildet. In dieser ersten Stufe berühren sich die Innenseiten der Flanken 3 der Ausbeulung 20 noch nicht. Gegebenenfalls könnte dieser erste Verfahrensschritt auch schon das Ende des Stauchungsvorganges sein, wenn die Ausbeulung für einen bestimmten Verwendungszweck bereits ausreichend als Steuermittel geformt ist.

Fig. 6 könnte aber auch als Darstellung einer einstufigen Herstellung einer Schalttrommel 1 aufgepasst werden, bei welcher die Steuerkurve 2 hohl bleibt, das heißt die Flanken 3 nicht soweit verformt werden, dass sie sich berühren, sondern mit einem Abstand versehen bleiben.

Es könnte praktisch eine Schalttrommel 1 hergestellt werden, die in Fig. 6 schon ihre endgültige Form hat.

Bei dem in Fig. 7 gezeigten Ende des zweiten Schrittes der Stauchung wird ein anderes Unterwerkzeug 6 verwendet als in der ersten Stufe, welches nun eine radiale, parallel zur Stauchungsrichtung des Werkstückes 10 verlaufende Begrenzung oder einen Seitenhalt 9 aufweist, der dem gemäß in Fig. 5 entspricht. Mit Hilfe dieses Unterwerkzeuges 6 wird die axiale Stauchung des Werkstückes 10 nun soweit fortgesetzt, bis die die Steuerkurve 2 bildende Ausbeulung 20 die Form der Ausnehmung 8 angenommen hat, sich die Innenseiten der Flanken 3 der Steuerkurve 2 berühren und sich die äußere Mantelfläche 21 der Steuerkurve 2 an den Seitenhalt 9 angelegt hat.

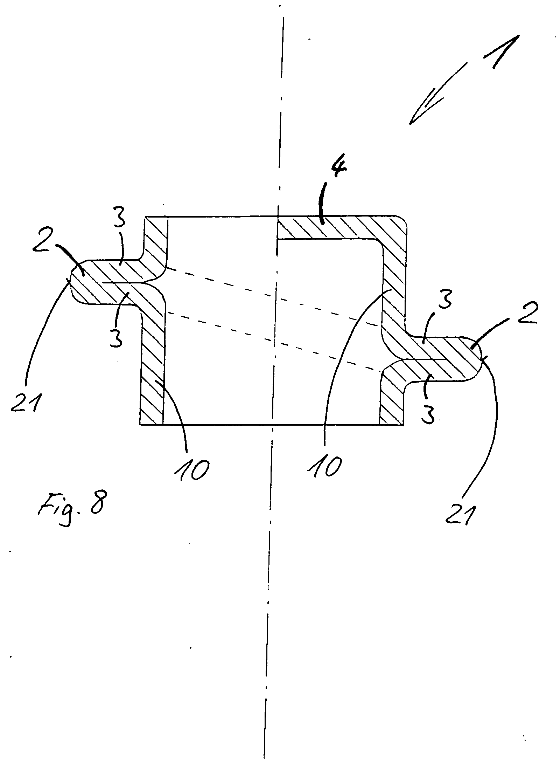

Fig. 8 zeigt eine mit der vorbeschriebenen Vorrichtung hergestellte, aus einem Rohrstück oder einem tiefgezogenen Zylinder 10 bestehende Schalttrommel 1 mit der an ihrer zylindrischen Oberfläche verlaufenden, radial überstehenden, einstückig angeformten Steuerkurve 2 nochmals im Querschnitt ohne die sie umgreifenden Werkzeuge 5 und 6.

Zur Herstellung einer Schalttrommel 1 mit einer an ihrem Umfang umlaufenden, mit seitlichen Flanken 3 etwa radial überstehenden, in ihrem Verlauf ihre Richtung ändernden Steuerkurve 2 wird ein Rohrstück oder ein tiefgezogener Rotationskörper 10 aus Metall in axialer Richtung gestaucht und entsprechend dem Verlauf der Steuerkurve 2 ausgebeult und der ausgebeulte Bereich 20 durch axial -zueinander bewegte, die Nachbarbereiche der Ausbeulung 20 außenseitig umschließende Werkzeuge 5, 6 axial zusammengedrückt, deren Ränder 51 und 61 jeweils den Verlauf der Flanken 3 der Steuerkurve 2 haben.

## Patentansprüche

1. Verfahren zur Herstellung einer Schalttrommel (1) mit einer an ihrem Umfang umlaufenden, mit seitlichen Flanken (3) etwa radial überstehenden, in ihrem Verlauf ihre Richtung ändernden Steuerkurve (2), **dadurch gekennzeichnet, dass** ein Rohrstück oder ein tiefgezogener Rotationskörper (10) aus Metall in axialer Richtung gestaucht und entsprechend dem Verlauf der Steuerkurve (2) ausgebeult wird und dass der ausgebeulte Bereich (20) durch axial zueinander bewegte, die Nachbarbereiche der Ausbeulung (20) außenseitig umschließende Werkzeuge (5, 6) axial zusammengedrückt wird, deren Ränder (51, 61) jeweils den Verlauf der Flanken (3) der Steuerkurve (2) haben.

2. Verfahren nach Anspruch 1, **dadurch gekennzeichnet, dass** ein erstes oder Oberwerkzeug (5) das Rohrstück oder den Hohlzylinder (10) an einer Stirnseite übergreift und an seinem Umfang bis zu dem auszubeulenden Bereich (20) umschließt, dass ein zweites oder Unterwerkzeug (6) die andere Stirnseite des Rohrstücks oder Hohlkörpers (10) übergreift und den auf der anderen Seite der späteren Steuerkurve (2) befindlichen Außenumfang und die Außenoberfläche des Rohrstücks oder Hohlkörpers (10) umschließt und dass der auszubeulende und zur Steuerkurve (2) zu formende Oberflächenbereich von beiden Werkzeugen (5, 6) freigelassen wird, dass dann das eine Werkzeug (5 oder 6) in Richtung zu dem anderen (5 oder 6) hin in axialer Richtung des Rohrstücks oder Hohlzylinders (10) oder beide Werkzeuge (5, 6) in dieser Richtung aufeinander zu bewegt und das Rohrstück oder der Hohlzylinder (10) gestaucht und zwischen den Werkzeugen (5, 6) ausgebeult wird und dass die Ausbeulung (20) proportional zur Annäherung der Werkzeuge (5, 6) in radialer Richtung vergrößert und in axialer Richtung verkleinert wird.

3. Verfahren nach Anspruch 1 oder 2, **dadurch gekennzeichnet, dass** die angestauchte Ausbeulung (20) derart zusammengedrückt wird, dass sich die Innenseiten der Flanken (3) berühren.

4. Verfahren nach einem der Ansprüche 1 bis 3, **dadurch gekennzeichnet, dass** das Stauchen des Rohrstücks oder des Hohlzylinders (10) in wenigstens zwei Schritten durchgeführt wird, wobei das Rohrstück oder der Hohlzylinder (10) zunächst mit einem ersten Ober- und Unterwerkzeug (5, 6) solange axial verformt und gestaucht wird, bis sich die Ausbeulung (20) bildet, und dass es danach in ein zweites Ober- und Unterwerkzeug (5, 6) eingelegt und weiter axial verformt und gestaucht wird, insbesondere bis sich die Innenseiten der Flanken (3) der Ausbeulung (20) des Rohrstücks oder des Hohlzylinders (10) berühren.

5. Verfahren nach einem der Ansprüche 1 bis 4, **dadurch gekennzeichnet, dass** das Rohrstück oder der Hohlzylinder (10) bei der Verformung innenseitig durch ein Kern-Werkzeug (11) stabilisiert wird.

6. Verfahren nach einem der Ansprüche 1 bis 5, **dadurch gekennzeichnet, dass** die Verformung der Steuerkurve (2) mit Hilfe eines Seitenhalts (9) radial begrenzt wird.

7. Verfahren nach einem der Ansprüche 1 bis 6, **dadurch gekennzeichnet, dass** die Steuerkurve (2) bei der axialen Verformung an dem Seitenhalt (9) anschlägt und dadurch radial gestaucht wird.

8. Vorrichtung zur Herstellung einer Schalttrommel (1) aus Metall aus einem Rohrstück oder einem tiefgezogenen Rotationskörper insbesondere zur Durchführung des Verfahrens nach einem der Ansprüche 1 bis 7, **dadurch gekennzeichnet, dass** sie wenigstens zwei Werkzeuge (5, 6) mit zylindrischen Ausnehmungen (8) zur Aufnahme des rohr- oder trommeiförmigen Werkstücks (10) aufweist, die nach dem Einlegen des Werkstücks (10) in axialer Richtung aufeinander zu bewegbar und zusammendrückbar sind und deren einander zugewandte Ränder (51, 61) von einer Durchmesserebene abweichend und parallel zueinander verlaufen und entsprechend einer radial zwischen ihnen auszubeulenden oder zu bildenden Steuerkurve (2) gekrümmt sind.

9. Vorrichtung nach Anspruch 8, **dadurch gekennzeichnet, dass** die Werkzeuge (5, 6) jeweils an dem der Ausnehmung (8) abgewandten Ende ihrer zylindrischen Hohlräume Widerlager (7) für die Stirnseite des rohr- oder trommelförmigen Werkstücks (10) haben, dessen Außendurchmesser dem Innendurchmesser der zylindrischen Hohlräume entspricht.

10. Vorrichtung nach Anspruch 8 oder 9, **dadurch gekennzeichnet, dass** die einander zugewandten, entsprechend der anzuformenden Steuerkurve (2) verlaufenden Ränder (51, 61) der Werkzeuge (5, 6) jeweils eine umlaufende Ausnehmung (8) zur Aufnahme des anzuformenden radialen Wulstes (20) beim Zusammendrücken der beiden Formen (5, 6) aufweisen oder freilassen.

11. Vorrichtung nach einem der Ansprüche 8 bis 10, **dadurch gekennzeichnet, dass** ein zylindrisches Kern-Werkzeug (11) im Inneren des Rohrstücks oder des Hohlzylinders (10) angeordnet ist, wobei der Außendurchmesser des Kern-Werkzeuges (11) dem Innendurchmesser des Rohrstücks oder des Hohlzylinders (10) entspricht.

12. Vorrichtung nach einem der Ansprüche 8 bis 11, **dadurch gekennzeichnet, dass** wenigstens eines der beiden Werkzeuge (5, 6) eine radiale Begrenzung oder einen Seitenhalt (9) im axial freigelassenen Bereich des Rohrstücks oder des Hohlzylinders (10) aufweist.

13. Vorrichtung nach einem der Ansprüche 8 bis 12, **dadurch gekennzeichnet, dass** die radiale Begrenzung oder der Seitenhalt (9) der Steuerkurve (2) an den Werkzeugen (5, 6) parallel zur Stauchungsrichtung des Rohrstücks oder des Hohlzylinders (10) verläuft.

14. Schalttrommel (1) mit einer an ihrer zylindrischen Oberfläche verlaufenden, radial überstehenden Steuerkurve (2), **dadurch gekennzeichnet, dass** sie aus einem Rohrstück oder einem tiefgezogenen Zylinder (10) besteht, an den die Steuerkurve (2) durch axiales Stauchen einstückig angeformt ist.

15. Schalttrommel (1) nach Anspruch 14, **dadurch gekennzeichnet, dass** sie an einer Stirnseite einen einstückig mit ihr verbundenen Boden (4) hat.

16. Schalttrommel (1) nach Anspruch 14 oder 15, **dadurch gekennzeichnet, dass** der an einem Ende angeordnete, einstückig mit der Schalttrommel (1) verbundene Boden (4) zentral durchbrochen und dabei in einem mittleren Bereich in axialer Richtung tiefgezogen ist und dieser Durchbruch als Lagerstelle für eine durch die Schalttrommel (1) verlaufende Welle dient.
